(19) Europäisches Patentamt
European Patent Office
Office européen des brevets

(11) Veröffentlichungsnummer: **0 410 180 A1**

(12) **EUROPÄISCHE PATENTANMELDUNG**

(21) Anmeldenummer: **90112902.3**

(51) Int. Cl.⁵: **C08F 8/08**

(22) Anmeldetag: **06.07.90**

(30) Priorität: **15.07.89 DE 3923527**

(43) Veröffentlichungstag der Anmeldung: **30.01.91 Patentblatt 91/05**

(84) Benannte Vertragsstaaten: **BE DE FR GB IT NL**

(71) Anmelder: **BASF Aktiengesellschaft**
**Carl-Bosch-Strasse 38**
**D-6700 Ludwigshafen(DE)**

(72) Erfinder: **Bender, Dietmar, Dr.**
**Sebastian-Kneipp-Strasse 19**
**D-6707 Schifferstadt(DE)**
Erfinder: **Bronstert, Klaus, Dr.**
**Gartenstrasse 26**
**D-6719 Carlsberg(DE)**
Erfinder: **Fischer, Martin, Dr.**
**Elbinger Weg 1**
**D-6700 Ludwigshafen(DE)**

(54) **Modifiziertes Polyisobuten.**

(57) Modifiziertes Polyisobuten der allgemeinen Formel I

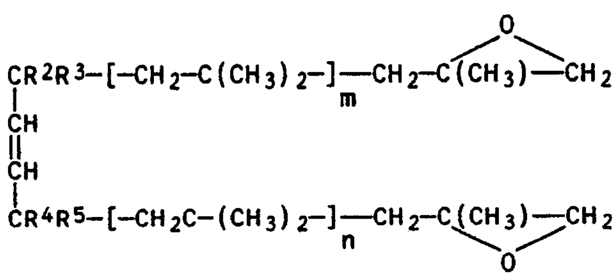

(I),

wobei $R^2$ bis $R^5$ Wasserstoff oder Alkyl oder Alkoxy mit jeweils 1 bis 20 C-Atomen und m und n einen Polymerisationsgrad bis zu 1000 bedeutet.

EP 0 410 180 A1

## MODIFIZIERTES POLYISOBUTEN

Die Erfindung bezieht sich auf neue, modifizierte Polymere des Isobutens und deren Herstellung durch selektive Epoxidierung der terminalen Doppelbindung von Polyisobuten, das durch Dehydrohalogenierung der Reaktionsprodukte der carbokationischen Polymerisation von Isobuten zugänglich ist.

Die carbokationische Polymerisation von Isobuten gelingt bekanntlich mittels olefinischer Initiatoren der allgemeinen Struktur A oder B

$X\text{-}R^1\text{-}X$ (A)

oder

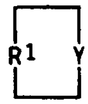

(B),

wobei $R^1$ für eine olefinische Gruppe steht, X ein Halogenatom, eine Alkoxy- oder Alkanoyloxygruppe und Y ein Sauerstoffatom oder eine OCO-Gruppe bedeutet. $BCl_3$ dient als Coinitiator.

Olefinische Initiatoren haben gegenüber den aromatischen Initiatoren den Vorteil, dap Nebenreaktionen der reaktiven Kettenenden mit dem Initiator vermieden werden. Es entstehen keine Indanstrukturen - vgl. Polymer Bulletin 18, 123 (1987); 20, 221 (1988); 20, 229 (1988) - die den Wert der Telechele wegen ihrer geringen Reaktivität drastisch reduzieren. Die Funktionalität (d.h. Anteil der reaktiven Kettenenden) der Telechele entspricht vielmehr dem erwarteten Wert von 2.

Die Erfindung bedient sich der Initiatorverbindungen der allgemeinen Struktur $A^1$ und $B^1$

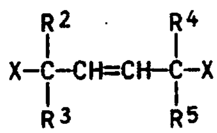

($A^1$)

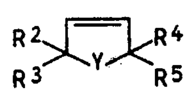

($B^1$),

bei denen $R^2$ bis $R^5$ jeweils Wasserstoff oder Alkyl oder Alkoxy mit jeweils 1 bis 20 C-Atomen sein können.

Solche Initiatorsysteme sind in Polymer Bulletin 21, S. 5-12 und 125 (1989) und 18, 433 (1987) beschrieben.

Für die meisten Einsatzgebiete ist die bei der Polymerisation entstehende Endgruppe $-CH_2-C(CH_3)_2Cl$ nicht reaktiv genug, so daß ihre Umwandlung in Hydroxyl-, Carboxyl- oder Epoxygruppen notwendig wird. Die zentrale Zwischenstufe dieser Umsetzungen ist ein $H_2C=CCH_3-CH_2$-terminiertes Telechel, das aus dem Cl-terminierten Vorläufer durch Dehydrohalogenierung mit z.B. K-tert.butanolat zugänglich ist. Ein olefinisch initiiertes Telechel enthält nach dieser Umsetzung neben der vom Initiator stammenden Doppelbindung zwei terminale Doppelbindungen. Während die weiteren Umsetzungen bei Telechelen mit aromatischer Initiatorsequenz durch die unterschiedliche Reaktivität des Aromaten und der Doppelbindungen ohne Nebenreaktion am Initiatorbaustein ablaufen, besteht bei Telechelen mit olefinischem Initiatorbaustein die Gefahr, dap neben den Endgruppen auch die zentrale Doppelbindung reagiert. Beispiele, wie die Spaltung der zentralen Doppelbindung mit $OSO_4$ sind aus Polymer Bulletin 18, 433 (1987) bekannt. Umsetzungen mit olefinisch initiierten Telechelen des Isobutens sind offensichtlich aus diesem Grund bisher nicht beschrieben.

ES wurde nun gefunden, daß olefinisch terminierte Telechele des Isobutens, die mittels eines olefinischen Initiators gestartet werden, selektiv an den terminalen Doppelbindungen epoxidierbar sind. Damit sind neue Verbindungen der allgemeinen Formel I zugänglich.

Erfindungsgegenstand sind demnach modifizierte Polymere des Isobutens der allgemeinen Struktur I

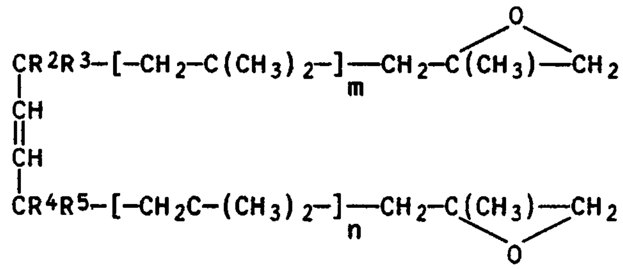

(I),

wobei m und n den jeweiligen Polymerisationsgrad, vorzugsweise eine Zahl von bis zu 1000 bedeuten. In dem zweiwertigen Rest $-CR^2R^3-CH=CH-CR^4R^5-$ des Initiators bedeuten wiederum $R^2$ bis $R^5$ jeweils Wasserstoff, Alkyl oder Alkoxy mit jeweils bis zu 20 C-Atomen.

Zur Epoxidierung des Telechels kann man auf die in Houben-Weyl, Band VI/3 beschriebenen Verfahren zurückgreifen.

Die Reaktivität des Epoxidierungsmittels hat keinen Einfluß auf die Regioselektivität des Angriffs. Besonders geeignete Epoxidierungsmittel sind jedoch tert.-Butylperoxid und Persäuren, wie Perbenzoesäure und Perameisensäure. Mit t-Butylperoxid führt man die Epoxidierung bevorzugt in Substanz oder in einem inerten Lösungsmittel bei einer Temperatur von 60 bis 120° C mit einem geeigneten Metallkatalysator durch.

Zur Herstellung der die Endgruppe $-CH_2-C(CH_3)_2Cl$ tragenden ersten Vorprodukte werden die eingangs erwähnten Initiatoren der allgemeinen Struktur $A^1$ und $B^1$ bevorzugt, in der $R^2$ und $R^6$ Wasserstoff, Alkyl oder Cycloalkyl bedeuten, X für Alkanoyloxy, Alkoxy oder Halogen und Y für Sauerstoff oder -O-CO steht.

Besonders bevorzugt sind Telechele mit Alkyl- oder Cycloalkylgruppen als Substituenten ($R^2$ bis $R^5$).

Zur quantitativen Umsetzung allen Halogens zu olefinischen Endgruppen löst man in THF, versetzt mit 4-fachem Überschuß K-t-Butanolat und erhitzt für 24 Stunden am Rückfluß. Verwendet man anstelle von K-t-Butanolat die Natriumsalze von n-Alkoholen, so entstehen neben den $H_2C=C(CH_3)-CH_2$-Endgruppen im geringem Umfang $(CH_3)_2C=CH$-Endgruppen, deren Reaktivität gegenüber Epoxidierungsmitteln jedoch ebenfalls deutlich größer ist als die der nicht-terminalen Doppelbindung und die somit ebenfalls glatt epoxidiert werden.

Experimenteller Teil:

Analytik:

Zur Charakterisierung der Telechele wurden Chlorbestimmung, GPC-Messung und $^1H$-NMR-Spektren herangezogen.

Cl-terminierte Telechele

Die $^1H$-NMR-Spektroskopie erlaubt es, zwischen den Protonen der Endgruppe und denen der Hauptkette zu unterscheiden (Polymer Bulletin 3, 339 (1980); Polymer Bulletin 21, 5 (1989)). Aus dem Intensitätsverhältnis der Resonanzen terminaler Methyl- und Methylengruppen bei $\delta$ = 1,67 bzw. 1,96 ppm sowie nicht-terminaler Methyl- und Methylengruppen bei $\delta$ = 1,1 bzw. 1,4 ppm wurde das mittlere Molgewicht Mn berechnet. Dieses Ergebnis wurde durch GPC-Messung mit Polyisobuten-Eichung sowie Chlorbestimmung gesichert.

Olefinisch terminierte Telechele

In den $^1H$-NMR-Spektren der Telechele erscheinen die Signale der entstandenen olefinischen Endgruppen, die $CH_2=C(CH_3)CH_2$- oder $(CH_3)_2C=CH$-Konstitution haben können, separiert bei $\delta$ = 4,62, 4,85 und 5,15 ppm. Aus dem Verhältnis der Intensität dieser Resonanzen zum Signal der olefinischen Initiatorsequenz bei 5,30 ppm wurde der Dehydrohalogenierungsgrad bestimmt. Ergänzt wurden diese Messungen durch Chlorbestimmungen, die mit den NMR-Befunden übereinstimmten.

Epoxy-terminierte Telechele

Bei der Epoxidierung werden die terminalen $CH_2=C(CH_3)$-Gruppen in entsprechende Epoxyreste umgewandelt. Aus den Intensitätsverhältnissen der olefinischen Resonanzen bei $\delta$ = 4,85 und 4,62 ppm (AB-Spinsystem) zu den Signalen der Epoxygruppe bei $\delta$ = 2,65 und 2,55 ppm (AB-Spinsystem) kann der Umsatz ermittelt werden. Das Intensitätsverhältnis der Epoxygruppen-Signale zur Resonanz der Initiatorsequenz bei 5,30 ppm wurde zur Bestimmung der Funktionalität herangezogen. Bei einer quantitativen Umwandlung aller $CH_2=C(CH_3)-CH_2$-Gruppen war dieses Verhältnis 2. Aus dem Intensitätsverhältnis der Epoxy-Signale zu denen der Hauptkette bei $\delta$ = 1.1 und 1.4 ppm kann das Zahlenmittel des Polymerisationsgrades und damit Mn berechnet werden.

Beispiel 1

$Cl-C(CH_3)_2-CH_2$-terminiertes Telechel

In einem 4-1 Rührreaktor mit Trockeneiskühler werden 2,5 l Methylchlorid, 200 ml Bortrichlorid, 100 ml Methylenchlorid und 12,6 g 2, 2, 5, 5-Tetramethyldihydrofuran für 15 Sekunden miteinander vermischt und innerhalb von 5 Minuten 210 ml Isobuten zugetropft. Man läßt 6 Stunden bei -40°C rühren und tropft anschließend 600 ml Methanol zu. Man wärmt auf und läßt die flüchtigen Bestandteile abdampfen. Das Telechel wird wie üblich wäßrig aufgearbeitet.

Beispiel 2

$CH_2=C(CH_3)-CH_2$-terminiertes Telechel

100 g eines Cl-terminierten Telechels mit einem Molgewicht Mn von 1500 g/mol werden in 500 ml THF gelöst und mit 75 g K-t-Butanolat versetzt. Die Mischung wird für 48 Stunden am Rückfluß erhitzt und nach Entfernen des THF in Toluol aufgenommen, mit Wasser extrahiert und eingeengt.

Beispiel 3

2-Methyl-2,3-epoxypropyl-terminiertes Telechel

100 g eines olefinisch terminierten Telechels mit einem Molgewicht von 1500 g/mol werden mit 60 g einer 50 %igen Lösung von tert.-Butylperoxid in tert.-Butanol und 1 g eines Metallkatalystors versetzt, für 1 Stunde auf 80°C und anschließend für 2 Stunden auf 100°C erhitzt. Man engt i.V. ein.

Beispiel 4

20 g eines olefinisch terminierten Telechels mit einem Molgewicht von 1500 g/mol werden in 50 ml Ether gelöst und zu einer Mischung aus 5 g Peressigsäure, 15 ml Eisessig und 150 ml Ether getropft. Die Reaktionsmischung wird 48 Stunden bei Raumtemperatur gerührt. Man neutralisiert in der Kälte mit Natronlauge, trocknet über $Na_2SO_4$ und engt ein. Die Epoxidierung der Endgruppen verläuft quantitativ.

Die $^1$H-NMR-Spektren der drei Telechele sind in der Zeichnung zusammengefaßt. Das Spektrum des epoxy-terminierten Telechele zeigt die quantitative Umwandung aller terminalen Doppelbindungen an.

**Ansprüche**

1. Modifiziertes Polyisobuten der allgemeinen Formel I

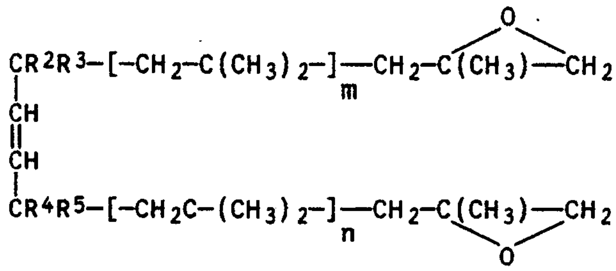

(I),

wobei $R^2$ bis $R^5$ Wasserstoff oder Alkyl oder Alkoxy mit jeweils 1 bis 20 C-Atomen und m und n einen Polymerisationsgrad bis zu 1000 bedeuten.

2. Verfahren zur Herstellung der Polymeren der Struktur I, dadurch gekennzeichnet, daß man in an sich bekannter Weise Isobuten der carbokationischen Polymerisation mit einem entsprechenden Olefin der Struktur A

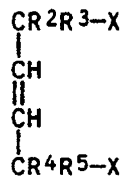

(A)

oder einer heterocyclischen Verbindung der Struktur B

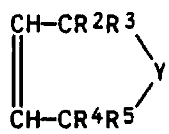

(B),

wobei X für Halogen, Alkoxy oder Alkanoyloxy und Y für Sauerstoff oder -OCO-steht, in Gegenwart von Bortrichlorid unterwirft und die erhaltenen Polyisobuten-(α,ω)-dihalogenide dehydrohalogeniert und epoxidiert.

Figur 1H-NMR-Spektren (300 MHz, CDCl3, RT)

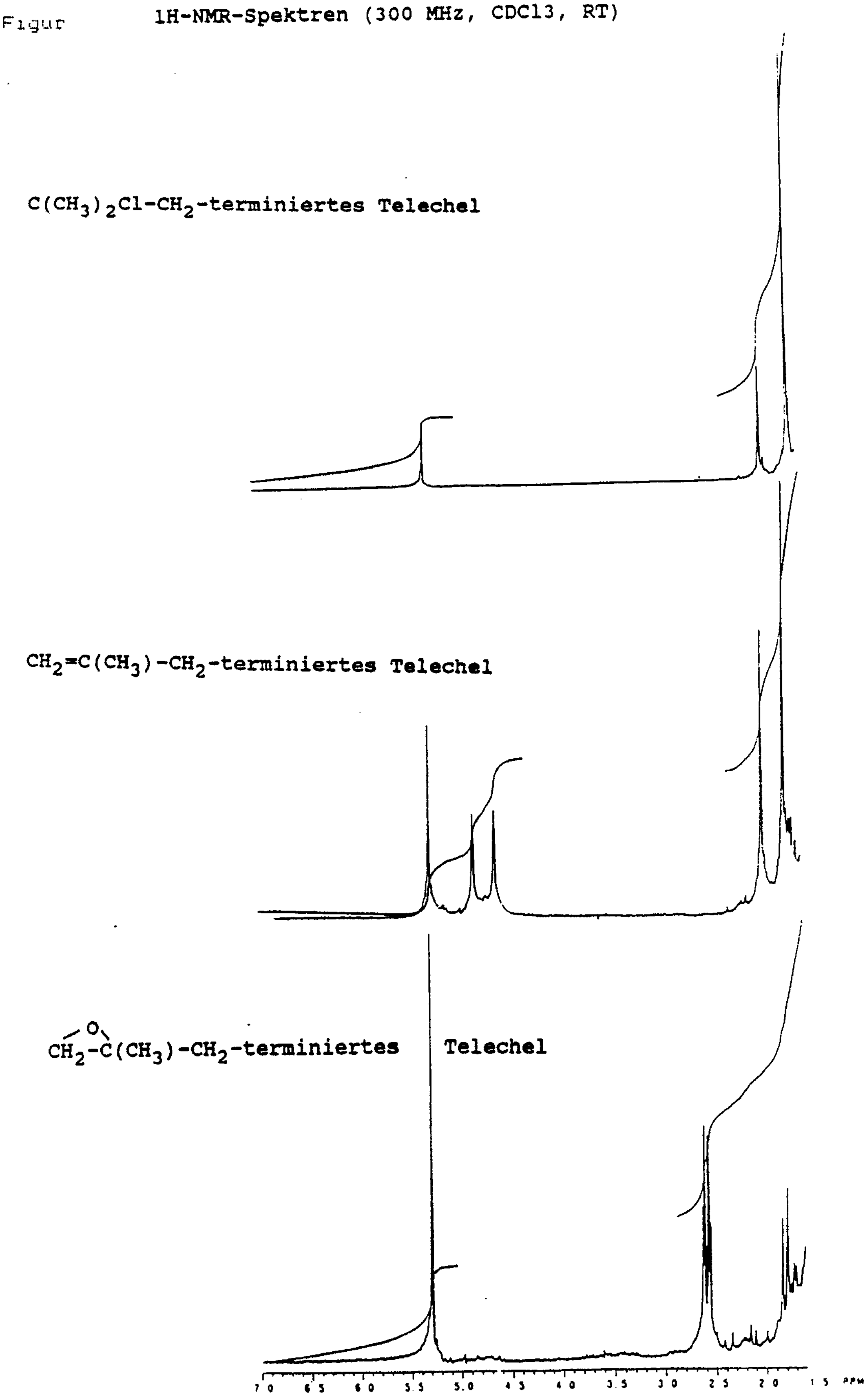

Europäisches Patentamt

# EUROPÄISCHER RECHERCHENBERICHT

Nummer der Anmeldung

**EP 90 11 2902**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | POLYMER BULLETIN, Band 21, Nr. 3, März 1989, Seiten 273-280, Springer-Verlag; M. ZSUGA et al.: "Living carbocationic polymerization" * Insgesamt * | 1-2 | C 08 F 8/08 |
| Y | JOURNAL OF POLYMER SCIENCE, Band 20, Nr. 10, Oktober 1982, Seiten 2809-2817, John Wiley & Sons, Inc.; J.P. KENNEDY et al.: "New telechelic poymers and sequential copolymers by polyfunctional initiator-transfer agents (inifers). XVIII. Epoxy and aldehyde telechelic polyisobutylenes" * Insgesamt * | 1-2 | |
| D,Y | EP-A-0 363 706 (BASF) * Ansprüche * | 1-2 | |
| | | | **RECHERCHIERTE SACHGEBIETE (Int. Cl.5)** |
| | | | C 08 F |

Der vorliegende Recherchenbericht wurde für alle Patentansprüche erstellt

| Recherchenort | Abschlußdatum der Recherche | Prüfer |
|---|---|---|
| Den Haag | 02 November 90 | DERAEDT G. |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument